**Europäisches Patentamt**

**European Patent Office**

**Office européen des brevets**

(19)

(11) Veröffentlichungsnummer: **0 206 327**
**B1**

# EUROPÄISCHE PATENTSCHRIFT

(12)

(45) Veröffentlichungstag der Patentschrift:
**10.01.90**

(21) Anmeldenummer: **86108648.6**

(22) Anmeldetag: **25.06.86**

(51) Int. Cl.⁴: **A 47 B 47/00,** F 16 B 7/18

(54) Vorrichtung zum Verbinden von Rohren.

(30) Priorität: **28.06.85 DE 3523155**

(43) Veröffentlichungstag der Anmeldung:
**30.12.86 Patentblatt 86/52**

(45) Bekanntmachung des Hinweises auf die Patenterteilung:
**10.01.90 Patentblatt 90/2**

(84) Benannte Vertragsstaaten:
**AT BE CH DE FR GB IT LI NL SE**

(56) Entgegenhaltungen:
**AT-B- 339 093**
**CH-A- 344 293**
**DE-A- 1 554 404**
**GB-A- 1 515 297**

(73) Patentinhaber: **Zerilli, Giacomo, Kurfürstenstr. 6,
D-5000 Köln 1 (DE)**

(72) Erfinder: **Zerilli, Giacomo, Kurfürstenstr. 6,
D-5000 Köln 1 (DE)**

(74) Vertreter: **Selting, Günther et al, Patentanwälte Von
Kreisler-Schönwald-Fues-Keller Selting-Werner
Deichmannhaus am Hauptbahnhof, D-5000 Köln 1 (DE)**

## Beschreibung

Die Erfindung betrifft eine Vorrichtung zum Verbinden von Rohren, insbesondere zur Herstellung von Regalen, Verkaufsständen, Stellagen und dergleichen Rohrkonstruktionen, mit einem dem Rohr an wenigstens einem Ende zugeordneten, in das Rohr einsetzbaren, einen Schraubenbolzen aufweisenden Verbindungselement zur Herstellung einer Schraubverbindung mit einem Verbindungsglied, wobei das Verbindungselement als spreizbares Klemmorgan ausgebildet ist und einen mit dem Schraubenbolzen durch axiale Zugkräfte spreizend zusammenwirkenden Spreizkonus aufweist und der Schraubenbolzen am freien Gewindeende Ein- oder Angriffsflächen zum ansetzen eines Werkzeuges wie Drehschlüssel oder Schraubenzieher aufweist.

Rohrkonstruktionen wie Regale, Stellagen und dergleichen werden aus einzelnen Rohrstäben durch Verschraubung mit würfelförmigen, hexagonalen oder polyedrischen Verbindungskörpern, die mit Gewindebohrungen versehen sind, zusammengesetzt. Dabei sieht beispielsweise ein bekanntes Bauelement zur Herstellung von Regalen, Verkaufsständen oder dergleichen eine Ausgestaltung vor, bei welcher das den Schraubenbolzen tragende Ende des Bauelementes hohl ausgebildet und an seiner Stirnseite mit einem Abschlußteil versehen ist, welches eine axial ausgerichtete Durchgangsbohrung aufweist, worin der Schraubenbolzen frei drehbar geführt ist, wobei der Kopf des Schraubenbolzens im hohlen Ende des rohrförmigen Bauelementes liegt und im Bereich des Schraubenkopfes die Wandung des Bauelementes eine fensterartige Ausnehmung aufweist.

Bei der fensterartigen Ausnehmung wird als nachteilig empfunden, daß sie zusätzlich zum Abschneiden der einzelnen Rohrlängen und erst danach durchführbar ist und folglich einen weiteren maschinellen Arbeitsschritt erfordert, der beispielsweise eine freie Gestaltung eines Verkaufsständers mit am Aufstellort auf Länge abgeschnittenen Rohrteilen ausschließt. Zudem wird für jeden Rohrdurchmesser ein angepaßtes Werkzeug benötigt. Schließlich wird durch Ausstanzen des Fensters die Oberflächenvergütung eines Rohres örtlich unterbrochen und kann zum Beispiel im Falle eines verchromten Stahlrohrs an dieser Stelle zur Rostbildung führen. Nicht zuletzt wirken die Fenster auch beim ästhetischen Gesamteindruck störend.

Aus dem DE-A-1 554 404 ist eine Vorrichtung zum Verbinden von Rohren bekannt, mit einem als spreizbares Klemmorgan ausgebildeten Verbindungselement. Dieses setzt sich aus den beiden Teilen 1a und 1b zusammen, welche jeweils eine zentrale Bohrung aufweisen, durch die ein Schraubenelement hindurchgeführt ist. Ein überstehendes Ende des Schraubenelementes soll zur Befestigung eines Rohres an den das Verbindungselement aufnehmenden Ende in eine Gewindebohrung an einem würfelförmigen Verbindungsglied eingeschraubt werden.

Nachteilig sind die das Zwischenglied bildenden Teile 1a und 1b nur im Bereich des vergrößerten Durchmessers ihrer zentralen Bohrungen geschlitzt. Oberhalb dieses Bereiches befindet sich ein konzentrisch nach innen vorstehender massiver Kragen, welcher nicht geschlitzt ist. Zur Spreizung dieser offenen Enden müssen sehr große axiale Druckkräfte hervorgerufen werden, weil das Schraubenelement mit seinem Kopf unter Zwischenlage einer gewindelosen Scheibe in einer konischen Vertiefung des Teils 1a an dessen ungeschlitztem Ende aufliegt.

Ein weiterer gravierender Nachteil wird jedoch zusätzlich noch dadurch hervorgerufen, daß das Schraubenelement durch die gewindelosen Bohrungen der Teile 1a und 1b lose hindurchgesteckt ist. Beim Eindrehen in ein Schraubengewinde des Verbindungskörpers kann daher beim Versuch, in den Schraubenschlitz des Schraubenelementes einen Schraubenzieher einzuführen, dieses infolge Fehlens einer Haltekraft ohne Widerstand in axialer Richtung ausweichen und nach hinten in das Rohr durchfallen. Zur Montage ist es demnach erforderlich, das Schraubenelement von hinten durch das Rohr durch ein Werkzeug gegenzuhalten. Dies erfordert aber, wenn es überhaupt möglich ist, ein jeweils der Länge des Rohrstücks erforderliches Werkzeug. Der hierdurch verursachte funktionelle Mengel ist ersichtlicherweise äußerst unbefriedigend.

Der Erfindung liegt die Aufgabe zugrunde, die vorbeschriebenen Nachteile und Schwierigkeiten sowie technischen Grenzen bei einer Vorrichtung zum Verbinden von Rohren der eingangs genannten Art zu überwinden und eine wesentlich verbesserte Vorrichtung zu Verbinden von Rohren anzugeben, welche in einfachster Weise montierbar ist und ohne das bei der bekannten Vorrichtung erforderliche Zusammenstecken mehrerer Teile sowie insbesondere ohne ein Gegenhalten des Schraubenbolzens mit einem Werkzeug und somit unter erheblich reduziertem Aufwand an Montage Arbeit und Montagezeit problemlos zusammenschraubbar ist.

Diese Aufgabe wird durch eine Vorrichtung gemäß dem Kennzeichnungsteil des vorliegenden Anspruchs 1 gelöst.

Mit großem Vorteil wird durch die erfindungsgemäße Ausgestaltung unter Überwindung der bei der bekannten Vorrichtung vorhandenen Schwierigkeiten und technischen Grenzen erreicht, daß das eine Einheit aus Spreizhülse, Spreizkonus und Schraubenbolzen bildende Verbindungselement von der Vorderseite her mit dem Eingriff eines Schlüssels wie Imbus-Schlüssel ohne jede Schwierigkeit montiert werd kann, weil der Schraubenbolzen des Verbindungselementes gegen die Schraubendruckfeder abgestützt ist und somit unverlierbar in dem von der Spreizhülse im Zusammenwirken mit dieser Feder gebildeten Käfig gehalten ist und somit dem Eingriff eines Schlüssels nicht ausweichen kann, wie dies in sehr nachteiliger Weise bei der bekannten Vorrichtung der Fall ist.

Weiterhin ergibt sich gegenüber dem Stand der Technik eine Verbesserung dadurch, daß die Spreizhülse der Länge nach mit einem Schlitz ausgebildet und somit wirklich gleichmäßig über ihre gesamte Länge spreizbar ist. Die Spreizhülse besitzt weiter eine mit einem schlanken konischen Verlauf ausgebildete zentrale Bohrung, in welcher, durch den Schraubenbolzen axial verspannbar, der Spreizkonus mit Keilwirkung gleitend angeordnet ist. Alle diese erfindungswesentlichen Ausgestaltungsmerkmale entsprechend der Merkmalskombination im Kennzeichnungsteil des Hauptanspruches wirken zu einer gemessen am Stand der Technik wesentlich verbesserten Funktion zusammen, durch welche die bisher bestehenden Schwierigkeiten und technischen Grenzen in einem entwicklungsraffenden Schritt überwunden werden.

Ein weiterer Vorteil dieser erfindungsgemäßen Ausgestaltung liegt darin, daß durch vergleichweise weniger kräftiges Anziehen der Spannschraube der Spreizkonuns im Zusammenwirken mit dem schlanken Innen-Konus der Spreizhülse diese kraftvoll auseinanderspreizt und somit eine kraftschlüssige Verbindung zwischen Rohrende und Spreizhülse herstellt, wobei dadurch, daß die Spannschraube im Bereich ihres freien Schaftendes eine zum Einsetzen eines Imbus-Schlüssels ausgebildete Vertiefung aufweist, ein Anzug dieser Schraube durch ein mit Gewindebohrungen durchsetztes Verbindungsglied beispielsweise in Form eines kugelförmigen oder polyedrischen Körpers mit Hilfe eines frei drehbar durch die Schraubenlöcher des Verbindungsgliedes hindurchführbaren und in die Vertiefung einsetzbaren Imbus-Schlüssels möglich gemacht wird. Dies ist deshalb problemlos möglich, weil in erfindungswesentlicher Ausgestaltung der Schraubenbolzen in der mit der Schraubendruckfeder zusammenwirkenden Spreizhülse wie in einem Käfig unverlierbar gehalten ist.

Eine Ausgestaltung sieht vor, daß der Schraubenbolzen am freien Gewindeende, mit dem er über das anschlußseitige Ende der Spreizhülse übersteht, eine zum Einsetzen eines Imbus-Schlüssels ausgebildete Vertiefung aufweist.

Dabei ist weiter vorgesehen, daß das freie Gewindeende des Schraubenbolzens etwa 5 bis 6 Gewindegänge lang aus der Spreizhülse überstehend ausgebildet und angeordnet ist.

Eine Ausgestaltung sieht vor, daß die Spreizhülse gegenüber dem Rohrende mit geringem Rücksprung eingesetzt ist. Ein solcher Rücksprung stellt sicher, daß das Rohr an der Verbindungsstelle mit einer glatten Kontur an das Verbindungsglied anschließt, wodurch statisch ein optimaler Halt erzielt und die Spannschraube ausschließlich auf Zug, nicht jedoch auf Biegung beansprucht wird.

Eine vorteilhafte Ausgestaltung sieht vor, daß die Spannhülse unter Vorspannung mit Kraftschluß in das Rohrende eingesetzt ist.

Im Falle einer Vormontage der Rohrabschnitte mit Spreizhülsen wird verhindert, daß diese beim Transport oder während der Montage sich verschieben oder herausfallen. Darüber hinaus wird durch die mit Vorspannung eingesetzten Spannhülsen die Montage wesentlich erleichtert.

In vielen Fällen ergibt sich eine sehr unkomplizierte Montage dadurch, daß ein Rohrstück an einem Ende eine Spreizhülse und am anderen Ende einen kraft- und formschlüssig eingesetzten Körper mit einem Gewindezapfen aufweist. Dieser ist vorteilhaft mit einem Preßsitz eingesetzt, durch welchen ein optimaler Halt mit einem Minimum an Arbeits- und Materialaufwand erzielt wird.

Und schließlich kann vorgesehen sein, daß das Verbindungselement (1), oder Teile davon wie Spreizhülse (2) und/oder Spreizkonus (3) aus Metall oder fallweise aus Kunststoff wie Hart-PVC hergestellt sind.

Die Vorrichtung zum Verbinden von Rohren wird in Zeichnungen in einer bevorzugten Ausführungsform gezeigt, wobei aus den Zeichnungen weitere vorteilhafte Einzelheiten der Erfindung entnehmbar sind.

Es zeigen:

Figur 1 eine perspektivische Darstellung der Einzelteile eines Verbindungselementes zwischen einem Rohrstück und einem hexagonalen bzw. polyedrischen Verbindungsglied, sowie einen Imbus-Schlüssel, in vor der Montage auseinandergezogener Stellung,

Figur 2 ebenfalls in perspektivischer Darstellung die Einzelteile einer Spreizhülse, auseinandergezogen angeordnet,

Figur 3 einen mit wenigstens zwei Rohranschlüssen gebildeten Eck- oder Knotenpunkt, im Schnitt.

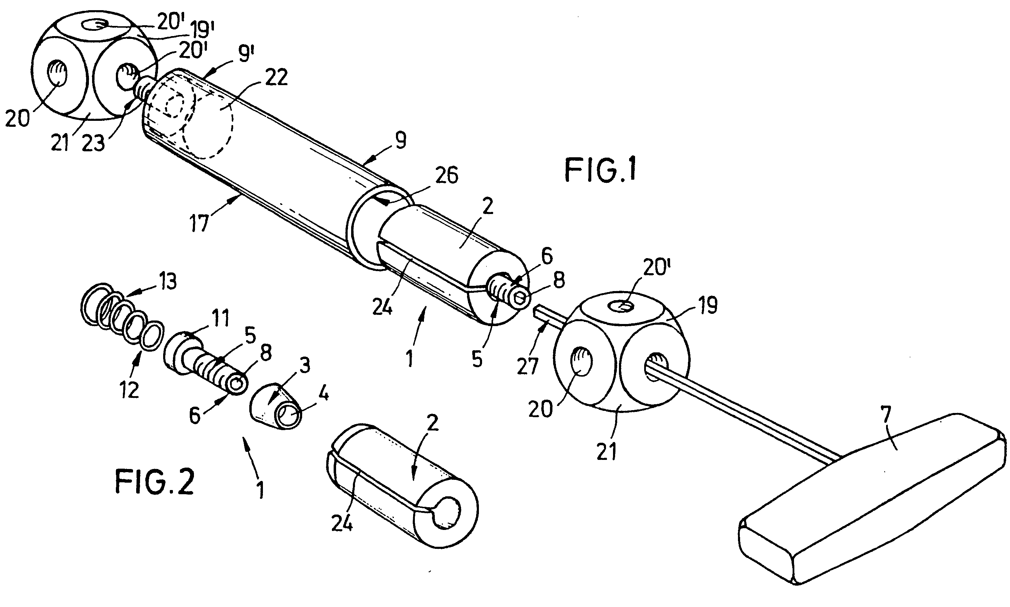

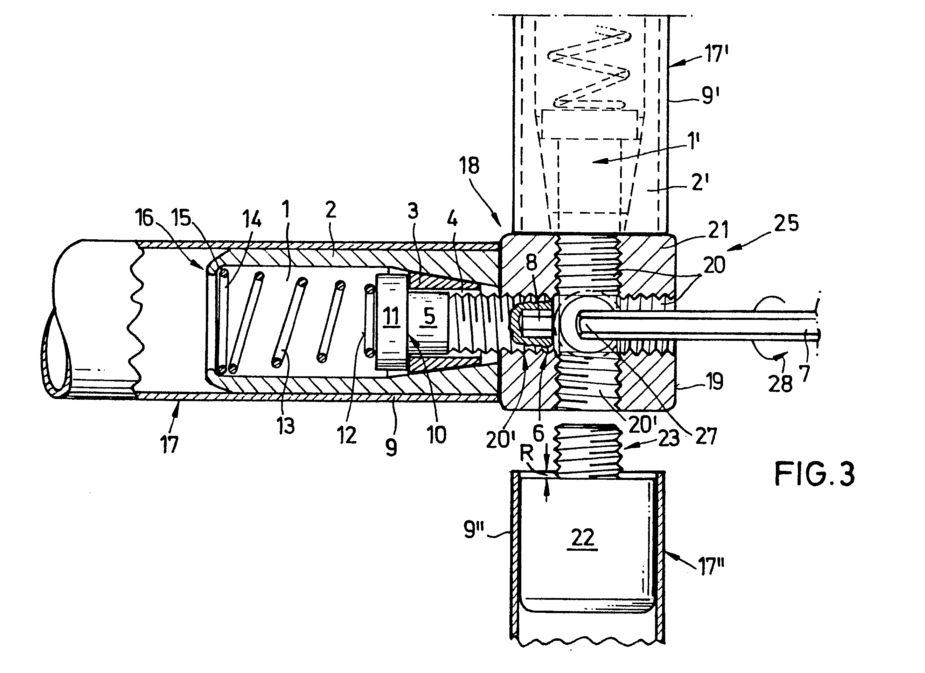

In Figur 1 ist ein Verbindungselement 1 nach der Erfindung gezeigt, vorbereitet zum Einsetzen in ein Rohrende 9. Die Einzelteile des Verbindungselementes 1 sind im auseinandergezogenen Zustand, fertig zum Zusammenbau, in Fig. 2 gezeigt. Und schließlich zeigt Figur 3 drei Rohrstücke 17, 17', 17'', welche mit Hilfe der Verbindungselemente 1, 1' und eines im Rohrstück 17'' an Stelle eines Verbindungselementes eingesetzten Körpers 22 mit einem Gewindezapfen 23 zu einem Knotenpunkt 25 im Zusammenwirken mit einem Verbindungsglied 19 zusammengeschraubt bzw. zum Zusammenschrauben vorbereitet sind.

Aus der Zusammenschau dieser Figuren 1 bis 3 geht hervor, daß das Verbindungselement 1 als integrierender Bestandteil des zugehörigen Rohrstückes 17 bzw. dessen Rohrendes 9 im Zusammenwirken mit diesem eine Funktionseinheit bilden. Dies ergibt sich daraus, daß das Verbindungselement 1 eine Spreizhülse 2 aufweist, welche durch einen in der Spreizhülse 2 axial verschiebbaren Spreizkonus 3 unter Einwirkung einer von der Spannschraube 5 erzeugten axialen Kraft gegen die Innenwand 26 des Rohrendes 9 gespreizt und auf diese Weise mit dem Rohrende form- und kraftschlüssig verbunden wird. Die hierbei entstehende Haltekraft der Spreizhülse 2 im Rohrende 9 durch Haftreibung an der Innenwand 26, die sich als radiale Komponente bei der Kraftzerlegung durch die Keilwirkung des Konus 3 aus der axialen Krafteinwirkung der Spannschraube 5 ergibt, wächst liniar im Kraftzerlegungsverhältnis mit der axialen Spannkraft. Infolgedessen ist sie um so größer, je größer beispielsweise eine am Rohr angreifende axiale Kraft einwirkt, die das Rohr aus der Verbindung mit dem Knotenpunkt 25 abzuziehen sucht. Wie aus Figur 1 weiter hervorgeht, setzt sich eine Rohrkonstruktion mit Hilfe des erfindungsgemäßen Verbindungselementes aus jeweils systemgleichen Moduln zusammen, wobei sich die einzelnen, einen Modul bildenden Elemente, gemäß Fig. 1 aus einem ersten Verbindungsglied 19, einem Rohrstück 17 mit an einem Ende 9 einer Spreizhülse 2 und am anderen Ende 9' einem kraft- und formschlüssig eingesetzten Körper 22 mit einem Gewindezapfen 23 und einem zweiten Verbindungsglied 19' zusammensetzen.

Selbstverständlich kann das Rohrstück 17 anstelle der Körpers 22 mit Gewindezapfen 23 auch zwei gleichartige Verbindungselemente 1,1' an beiden Enden 9,9' aufweisen.

Wie weiter aus der Zusammenschau der Figuren 1 bis 3 hervorgeht, ist in Abkehr von einer üblichen Ausgestaltung einer Imbusschraube mit Anordnung einer Vertiefung zum Eingriff eines Imbusschlüssels im Kopfende, mit der Erfindung die Anordnung einer Vertiefung 8 zum Eingriff des Imbusschlüssels 7 am freien Schaftende 6 der Spannschraube 5 vorgesehen. Hierdurch wird es erstmals in überraschender Weise möglich, gemäß Darstellung in Fig. 1 und 3, mit dem Imbusschlüssel 7 durch ein Verbindungsglied 19 hindurchgreifend die Spannschraube 5 in eine Gewindebohrung 20 des Verbindungsgliedes 19 einzuschrauben. Dies führt mit Vorteil bei einem Modul in der beispielhaft gewählten Zusammensetzung gemäß Fig. 1 eines Rohrstückes mit einem festeingesetzten Körper 22 mit Gewindezapfen 23 sowie einem Verbindungselement 1 an der anderen Rohrseite dazu, daß zunächst die Schraubverbindung von Rohrstück 17 mit Gewinde 23 in die Gewindebohrung 20' des Verbindungsgliedes 19' erfolgt, zu welchem Zweck das Rohrstück 17 in eine schraubende Drehbewegung versetzt wird. Hingegen beim Anschluß des Rohrendes 9 an das erste Verbindungsglied 19 mithilfe der gemäß Fig. 3 in das Rohrende eingesetzten Spreizhülse 2 des Verbindungselementes 1 wird nunmehr mithilfe des durch eine Gewindebohrung 20 des Verbindungsstückes 19 hindurchgeführten Schlüsselschafts 27 des Imbusschlüssels 7 im Zusammenwirken mit der kompatibel geformten Vertiefung 8 im Schaft 6 der Spannschraube 5 diese durch Linksdrehung des Imbusschlüssels 7 entsprechend Pfeil 28 zum Anzug gebracht und damit ohne Drehung des Rohrstückes 17 die erwünschte Verbindung beispielsweise am Knotenpunkt 25 herbeigeführt.

Wie aus der Figur 3 zu ersehen, ist die Spreizhülse 2 des Verbindungselementes 1 jeweils im wesentlichen bündig in ein Rohrende 9 bzw. 9' und gegebenenfalls 9'' eingesetzt. Die Spreizhülse 2 oder auch der Körper 22 mit Gewindezapfen 23 kann gemäß Darstellung im unteren Teil von Fig. 3 gegenüber dem Rohrende 9'' mit geringem Rücksprung R eingesetzt sein, wobei dieser beispielsweise eine Größenordnung von 1 bis 2 mm aufweist. Dieser Rücksprung ergibt mit Vorteil einen fugenlosen Anschluß des Rohrendes an die Anschlußfläche eines Verbindungsgliedes 19 bzw. 19' und sorgt zugleich dafür, daß die Spannschraube 5 bzw. der Gewindezapfen 23 ausschließlich auf Zug und nicht auf Biegung beansprucht werden.

Mit Vorteil ist die Spannhülse 2, die sich bestens zur Herstellung als Drehautomatenteil eignet, so dimensioniert, daß sie unter Vorspannung zum Beispiel mit einem Festsitz mit geringem Kraftschluß in das Rohrende 9 bzw. 9' eingesetzt ist. Hierdurch wird mit Vorteil und in einfacher Weise ein Verrutschen der beispielsweise vormontierten Spannhülsen beim Transport oder während der Montage verhindert.

Die Spannschraube 5 ist durch die Bohrung 4 im Konus 3 frei drehbar hindurchgeführt und hintergreift diesen mit der schaftseitigen Fläche 10 ihres Kopfes 11.

Weiterhin ist mit Vorteil vorgesehen, daß der Kopf 11 der Spannschraube 5 gegen ein Ende 12 eines Rückstellelementes vorzugsweise in Form einer Schraubendruckfeder 13 abgestützt ist, deren anderes Ende 14 an einer Hinterschneidung 15 am Ende 16 der Spreizhülse 2 abgestützt ist.

Dabei kann die Spreizhülse 2 und der Spreizkonus 3 nach Maßgabe der Querschnittsform eines Rohres 17, an die sie formschlüssig angepaßt sind, im Querschnitt kreisförmig oder eckig oder sonst wie profiliert ausgebildet sein.

Weiter sind mit Vorteil im Verbindungsbereich 18 zweier oder mehrerer Rohre 17,17',17'', wobei dieser Verbindungsbereich 18 einen Knotenpunkt 25 bildet, ein Verbindungsglied 19 in Form eines von Gewindebohrungen 20,20' vorzugsweise kreuzweise durchsetzten Körpers 21 von kugelförmiger oder polyedrischer Gestaltung vorgesehen.

Eine Erleichterung der Montage wird mit Vorteil dadurch erreicht, daß das freie Ende 6 des Spannschraubenschaftes etwa 5 bis 6 Gewindegänge lang aus der Spreizhülse 2 hervorragend ausgebildet und angeordnet ist. Im Zusammenwirken mit der ihn abstützenden Schraubendruckfeder 13 setzt der Schaft 6 der Spannschraube 5 dem eingreifenden Imbusschlüssel 7 und dem Ansatz einer Gewindebohrung 20,20' eine axiale Kraft entgegen, die beim Einschrauben beim Zusammenbau sehr hilfreich ist.

Ein Rohrstück 17 kann auch an beiden Enden 9,9' mit kraft- und formschlüssig eingesetzten kugelförmigen oder polyedrischen, Gewindebohrungen 20 aufweisenden Körpern 21,21' als fester Abstandhalter ausgebildet sein.

Erfindungswesentlich sieht eine Ausgestaltung der Spreizhülse 2 vor, daß diese an einer Längsseite mit einem Schlitz 24 ausgebildet ist. Hierdurch erhält die Spreizhülse 2 die erforderliche Flexibilität zur gleichmäßigen radialen Dehnung.

Die Teile des Verbindungselementes 1, insbesondere Spreizhülse und/oder Spreizkonus können aus Metall, fallweise aber auch aus Kunststoff hergestellt sein. Der Werkstoff ist für die Funktion des Verbindungselementes nicht entscheidend, sondern eher eine Frage der vorgesehenen Belastbarkeit eines Rohrgestells.

Weil die Erfindung ein unkompliziertes Verbindungselement angibt, das sich zur Herstellung frei gestaltbarer Rohrkonstruktionen mit glatt abgeschnittenen und unbearbeiteten Rohrstücken eignet, hervorragende Verbindungsqualitäten erzielt, leicht montierbar sowie preisgünstig in großen Stückzahlen herstellbar ist, kann von einer idealen Lösung der eingangs gestellten Aufgabe gesprochen werden.

**Patentansprüche**

1. Vorrichtung zum Verbinden von Rohren, insbesondere zur Herstellung von Regalen, Verkaufsständen, Stellagen und dergleichen Rohrkonstruktionen, mit einem dem Rohr (17) an wenigstens einem Ende zugeordneten, in das Rohr (17) einsetzbaren, einen Schraubenbolzen (5) aufweisenden Verbindungselement (1) zur Herstellung einer Schraubverbindung mit einem Verbindungsglied (19), wobei das Verbindungselement (1) als spreizbares Klemmorgan (2, 3) ausgebildet ist und einen mit dem Schraubenbolzen (5) durch axiale Zugkrafte spreizend zusammenwirkenden Spreizkonus (3) aufweist und deren Schraubenbolzen (5) am freien Gewindeende (6) Ein- oder Angriffsflächen (8) zum Ansetzen eines Werkzeuges (7) wie Drehschlüssel oder Schraubenzieher aufweist, dadurch gekennzeichnet, daß
- das Verbindungselement (1) eine der Länge nach mit einem Schlitz (24) ausgebildete Spreizhülse (2) aufweist,
- der Schraubenbolzen (5) den Spreizkonus (3) mit dem Kopf (11) hintergreifend frei drehbar durch eine Bohrung (4) im Spreizkonus (3) hindurchgesteckt ist, und
- der Kopf (11) des Schraubenbolzens (5) innerhalb der Spreizhülse (2) gegen ein Ende (12) eines Rückstellelementes (13), vorzugsweise eine Schraubendruckfeder abgestützt ist, deren anderes Ende (14) an einer Hinterschneidung (15) am Ende (16) der Spreizhülse (2) abgestützt ist.

2. Vorrichtung nach Anspruch 1, dadurch gekennzeichnet, daß der Schraubenbolzen (5) in der mit der Schraubendruckfeder (13) nach Art eines Käfigs zusammenwirkenden Spreizhülse (2) unverlierbar gehalten ist.

3. Vorrichtung nach Anspruch 1, dadurch gekennzeichnet, daß der Schraubenbolzen (5) am freien Gewindeende (6), mit dem er über das anschlußseitige Ende (18) der Spreizhülse (2) übersteht, eine zum Einsetzen eines Imbusschlüssels (7) ausgebildete Vertiefung (8) aufweist.

4. Vorrichtung nach einem der Ansprüche 1 bis 3 dadurch gekennzeichnet, daß das freie Gewindeende (6) des Schraubenbolzens (5) etwa 5 bis 6 Gewindegänge lang aus der Spreizhülse (2) überstehend ausgebildet und angeordnet ist.

5. Vorrichtung nach einem der Ansprüche 1 bis 4, dadurch gekennzeichnet, daß die Spreizhülse (2) gegenüber dem Rohrende (9,9') mit geringem Rücksprung (R) eingesetzt ist.

6. Vorrichtung nach einem der Ansprüche 1 bis 5, dadurch gekennzeichnet, daß die Spreizhülse (2) unter Vorspannung mit Kraftschluß in das Rohrende (9) eingesetzt ist.

7. Vorrichtung nach einem der Ansprüche 1 bis 6, dadurch gekennzeichnet, daß ein Rohrstück (17) an einem Ende (19) ein Verbindungselement (1) und am anderen Ende (9) einen kraft- und formschlüssig eingesetzten Körper (22) mit einem Gewindezapfen (23) aufweist.

8. Vorrichtung nach einem der Ansprüche 1 bis 7, dadurch gekennzeichnet, daß Teile des Verbindungselementes (1) wie Spreizhülse (2) und/oder Spreizkonus (3) aus Metall oder fallweise aus Kunststoff hergestellt sind.

## Claims

1. Device for the connection of tubes, particularly for the manufacturing of shelves, vending stands, supporting structures and similar tube assemblies, having a connecting element (1), being assigned to the tube (17) by at least one end, being adapted for insertion into the tube (17) and being provided with a screw bolt (5), for providing a bolt connection with a connecting member (19), the connecting element (1) being formed as an expandable clamping organ (2, 5) and being provided with an expanding cone (3) expandably cooperating with said screw bolt (5) by axial tensile forces, the screw bolts (5) having their free screw-thread ends (6) provided with engaging or working surfaces (8) for application of a tool, such as a turn handle or a screw driver, characterized in that
- the connecting element (1) is provided with an expanding bush (2) with a slot (24) extending along the length thereof,
- the screw bolt (5), with its head (11) engaging behind the expanding cone (3), is freely rotatably inserted through a bore (4) in the expanding cone (3), and
- the head (11) of the screw bolt (5) is supported, within the expanding bush (2), against an end (12) of a reset element (13), preferably a compression spring, the other end (14) of which is supported at a recessed portion (15) at the end (16) of the expanding bush (2).

2. Device according to claim 1, characterized in that the screw bolt (5) is undetachably held in the expanding bush (2) cooperating with the compression spring (13) in the manner of a cage.

3. Device according to claim 1, characterized in that the screw bolt (5), at the free screw-thread end (6) by which its projects beyond the connecting-side end (18) of the expanding bush (2), is provided with a recess (8) formed to be engaged by a wrench (7) for socket head cap screws.

4. Device according to any one of claims 1 to 3, characterized in that the free screw-thread end (6) of the screw bolt (5) is formed and arranged to project beyond the expanding bush (2) by a length of substantially 5 to 6 thread pitches.

5. Device according to any one of claims 1 to 4, characterized in that the expanding bush (2) is inserted with a slight backward offset (R) with respect to the end (9, 9') of the tube.

6. Device according to any one of claims 1 to 5, characterized in that the expanding bush (2) is inserted into the end (9) of the tube under prestress with non-positive connection.

7. Device according to any one of claims 1 to 6, characterized in that a tube portion (17) has one end (9) provided with a connecting element (1) and has its other end (9) provided with a body (22) inserted in positive and non-positive connection and having a threaded stem (23).

8. Device according to any one of claims 1 to 7, characterized in that parts of the connecting element (1), such as the expanding bush (2) and/or the expanding cone (3), are made of metal or, if needed, of plastics material.

## Revendications

1. Dispositif de connexion de tubes, en particulier pour la réalisation d'étagères, présentoirs, échafaudages et autres constructions tubulaires similaires, avec un élément de connexion (1) présentant un boulon fileté (5), pouvant être incorporé dans le tube (17) et adjoint au tube (17) à au moins une extrémité, pour la réalisation d'une connexion vissée avec un organe de connexion (19), l'élément de connexion (1) étant construit sous forme d'organe de serrage pouvant être écarté (2, 5) et présentant un cône d'écartement (3) coopérant à l'écartement avec le boulon fileté (5) par des forces de traction axiales, et dont le boulon fileté (5) présente, à l'extrémité libre (6) de la tige filetée, des surfaces de prise (8) pour l'introduction d'un outil (7), tel qu'une clef ou un tournevis, caractérisé en ce que:

- l'élément de connexion (1) présente un manchon d'écartement (2) formé, dans le sens de la longueur, avec une fente (24),

- le boulon fileté (5) est introduit, avec liberté de rotation, à travers un orifice (4) dans le cône d'écartement (3), la tête (11) venant en prise à l'arrière du cône d'écartement (3),

- la tête (11) du boulon fileté (5) s'appuie, à l'intérieur du manchon d'écartement (2), contre une extrémité (12) d'un élément de rappel (13), de préférence un ressort de pression hélicoïdal, dont l'autre extrémité (14) s'appuie contre une contredépouille (15) à l'extrémité (16) du manchon d'écartement (2).

2. Dispositif suivant la revendication 1, caractérisé en ce que le boulon fileté (5) est maintenu de manière imperdable dans le manchon d'écartement (2) coopérant avec le ressort de pression hélicoïdal (13) à la manière d'une cage.

3. Dispositif suivant la revendication 1, caractérisé en ce que le boulon fileté (5) présente, à l'extrémité libre de la tige filetée (6), par laquelle il surmonte l'extrémité (18) du côté de la connexion du manchon d'écartement (2), un creux (8) formé pour l'introduction d'une clef à douille (7).

4. Dispositif suivant l'une des revendications 1 à 3, caractérisé en ce que l'extrémité libre de la tige filetée (6) du boulon fileté (5) est formée et disposée de manière à sortir du manchon d'écartement d'une longueur d'environ 5 à 6 spires de vis.

5. Dispositif suivant l'une des revendications 1 à 4, caractérisé en ce que le manchon d'écartement (2) est placé avec un léger retrait (R) par rapport à l'extrémité du tube (9, 9').

6. Dispositif suivant l'une des revendications 1 à 5, caractérisé en ce que le manchon d'écartement (2) est engagé à force, prétendu, dans l'extrémité du tube (9).

7. Dispositif suivant l'une des revendications 1 à 6, caractérisé en ce qu'un élément de tube (17) présente, à une extrémité (9), un élément de connexion (1) et, à l'autre extrémité (9), un corps (22) à tenon fileté (23), engagé à force et avec liaison de forme.

8. Dispositif suivant l'une des revendications 1 à 7, caractérisé en ce que des parties de l'élément de connexion (1), telles que le manchon d'écartement (2) et/ou le cône d'écartement (3) sont réalisées en métal ou partiellement en matière synthétique.

FIG.1

FIG.2

FIG.3

EP 0 206 327 B1